(19) Europäisches Patentamt
European Patent Office
Office européen des brevets

(11) EP 2 597 368 B1

(12) **EUROPÄISCHE PATENTSCHRIFT**

(45) Veröffentlichungstag und Bekanntmachung des Hinweises auf die Patenterteilung:
**19.10.2016 Patentblatt 2016/42**

(51) Int Cl.:
*F23D 14/18* (2006.01)     *F01N 3/025* (2006.01)
*F01N 3/022* (2006.01)     *F23D 14/58* (2006.01)

(21) Anmeldenummer: **12007817.5**

(22) Anmeldetag: **20.11.2012**

(54) **Brennervorrichtung für den Brennraum eines Brenners, insbesondere zur Anhebung der Abgastemperatur einer Brennkraftmaschine eines Kraftfahrzeugs**

Burner apparatus for the combustion chamber of a burner, in particular for raising the temperature of the exhaust gas of a combustion engine of a motor vehicle

Dispositif de brûleur pour la chambre de combustion d'un brûleur, notamment pour renforcer la température des gaz d'échappement d'un moteur à combustion interne d'un véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2011 DE 102011119163**

(43) Veröffentlichungstag der Anmeldung:
**29.05.2013 Patentblatt 2013/22**

(73) Patentinhaber: **MAN Truck & Bus AG**
**80995 München (DE)**

(72) Erfinder: **Döring, Andreas**
**82008 München (DE)**

(74) Vertreter: **Liebl, Thomas et al**
**Neubauer - Liebl - Bierschneider**
**Patentanwälte**
**Münchener Straße 49**
**85051 Ingolstadt (DE)**

(56) Entgegenhaltungen:
**EP-A1- 1 701 092**     **DE-A1- 19 631 552**
**DE-A1- 19 847 042**     **DE-A1-102009 028 624**
**JP-A- S5 770 307**     **US-A- 3 847 534**
**US-A1- 2005 150 217**

EP 2 597 368 B1

**Beschreibung**

Die Erfindung betrifft eine Brennervorrichtung für den Brennraum eines Brenners, insbesondere zur Anhebung der Abgastemperatur einer Brennkraftmaschine eines Kraftfahrzeugs, nach dem Oberbegriff des Patentanspruchs 1.

Zur Minimierung von unerwünschten Verbrennungsprodukten aus Brennkraftmaschinen, wie Stickoxide, Kohlenmonoxid, Kohlenwasserstoffe und Ruß, werden Abgasnachbehandlungssysteme eingesetzt, wie beispielsweise SCR-Katalysatoren, die nach dem Prinzip der selektiven katalytischen Reduktion arbeiten. Zur Abgasnachbehandlung werden außerdem auch Drei-Wege-Katalysatoren und Partikelfilter eingesetzt.

Bei diesen Abgasnachbehandlungssystemen ist es erforderlich, dass das zu behandelnde Abgas eine geeignete Mindesttemperatur hat, um eine möglichst gute Umwandlung der Schadstoffe in ungefährliche Abgasbestandteile zu erreichen.

Um eine ausreichend hohe bzw. möglichst optimale Abgastemperatur zu erreichen, können beispielsweise Porenbrenner eingesetzt werden, bei denen ein dem Abgasstrom zugeführtes Brennstoffgemisch innerhalb einer porösen, meist keramischen oder metallischen Schaumstruktur verbrennt. Ein derartiger Porenbrenner ist aus der DE 10 2004 049 903 A1 bekannt. Bei diesem Porenbrenner ist der Brennraum von einem Porenkörper ausgefüllt, dem eine Verdampfungszone zur Verdampfung von zugeführtem Brennstoff vorgelagert ist. Außerdem ist eine Zündeinrichtung zur Zündung des brennbaren Gasgemisches vorgesehen.

Ein Beispiel für einen weiteren Porenbrenner beschreibt die EP 1 918 640 A2, bei dem der Brennraum ebenfalls vollständig von einem keramischen Porenkörper ausgefüllt ist.

Um ein unkontrolliertes Zurückschlagen der Flamme in den Bereich stromauf des Porenbrenners zu vermeiden, sind die Porenbrenner üblicherweise in einen ersten Bereich, in dem keine Zündung des Brennstoff-/Luftgemisches möglich ist, und einen zweiten Bereich, in dem die Zündung des Gemisches erfolgt, aufgeteilt. Damit eine in den Brennraum eines Brenners eingesetzte Brennvorrichtung zündfähige und nicht zündfähige Bereiche umfasst, muss die Brennervorrichtung eine geeignete Struktur mit größeren und kleineren Strömungsquerschnittsflächen aufweisen. Der strömungstechnisch erste Bereich besitzt derart kleine Strömungsquerschnittsflächen, dass die Wärmeabführung an das Material größer ist als die durch die Reaktion mit dem gebildete Wärme, so dass es zu keiner Entzündung des durchströmenden BrennstoffLuft-Gemischs kommt. In anderen Bereichen sind die Strömungsquerschnittsflächen so groß, dass in diesen Bereichen die Wärmeabführung an das Material kleiner ist als die durch die Reaktion gebildete Wärme. Dadurch kommt es in diesen "zündfähigen" Bereichen zur Entzündung des Brennstoff-Luft-Gemischs. Diese Zusammenhänge lassen sich durch die so genannte modifizierte Pecletzahl PE gemäß nachfolgender Gleichung beschreiben:

$$ PE = S \cdot d \cdot c_p \cdot \rho / \lambda $$

wobei

    S = laminare Flammengeschwindigkeit
    D = Kanaldurchmesser
    $c_p$ = Wärmekapazität
    p = Gasdichte
    A = Wärmeleitfähigkeit des Gases

Bei Werten von ca. PE < 65 erlöscht eine vorhandene Flamme bzw. ist es nicht möglich, eine Entzündung des Gemischs herbeizuführen, während bei Werten von ca. PE > 65 ein Entzünden des Brennstoff-Luft-Gemisches bzw. eine Oxidation des Brennstoffs möglich ist.

Die bei den bekannten Porenbrennern verwendeten Porenkörper besitzen eine unregelmäßige innere Schaumstruktur mit völlig unregelmäßigen Porengrößen mit ebenso unregelmäßigen Porenwänden. Dadurch ergeben sich lokal sehr stark unterschiedliche Wärmeleitungs- bzw. Wärmeübertragungseigenschaften und Strömungsverhältnisse, wodurch es einerseits zu undefinierten Betriebsbereichen und großen lokalen Wärmespannungen kommt. Die undefinierten Betriebsbereiche haben zur Folge, dass ungleichmäßig verteilt im Porenkörper Bereiche mit hoher Zündfähigkeit vorhanden sein können, die dann eine besonders hohe lokale Wärmebelastung innerhalb des Porenkörpers zur Folge haben. Andererseits können aber auch größere Bereiche mit besonders kleinen Poren dazu führen, dass dort das durchströmende Gas nicht zünden kann. Auftretende lokale Wärmespannungen führen dabei oftmals zu Beschädigungen der Schaumstruktur. Außerdem ist bei Porenbrennern die hohe lokale Temperatur im Gaseintrittsbereich der Schaumstruktur problematisch und kann bei Überbelastung zum Schmelzen der Schaumstruktur im Gaseintrittsbereich führen. Außerdem sind derartige Porenbrenner wegen der geringen mechanischen Stabilität der darin verwendeten Schaumstrukturen für den Einsatz in Kraftfahrzeugen eher nicht geeignet.

Eine Brennervorrichtung gemäß des Obergriffes des Anspruchs 1 ist aus DE 10 2009 028 624 Bekannt.

Die Aufgabe der Erfindung besteht darin, eine Brennervorrichtung für den von einem brennbaren Gemisch durchströmten Brennraum eines Brenners, insbesondere zur Anhebung der Abgastemperatur einer Brennkraftmaschine eines Kraftfahrzeugs, zu schaffen, die eine Struktur mit definiert angeordneten zündfähigen und nicht zündfähigen Bereichen hat.

Die Aufgabe wird durch die Merkmale des Patentanspruchs 1 gelöst. Bevorzugte Weiterbildungen der Erfindung sind in den Unteransprüchen offenbart.

Erfindungsgemäß weist die Brennervorrichtung, die von einem brennbaren Brennstoff-Luft-Gemisch durchströmt wird, eine Struktur mit mehreren Strömungskanälen auf, die in Strömungsrichtung sich ändernde Strömungsquerschnittsflächen aufweisen. Jeder Strömungskanal besitzt wenigstens einen Kanalabschnitt mit einer kleineren Strömungsquerschnittsfläche, in welchem keine Zündung des ihn durchströmenden Brennstoff-Luft-Gemischs erfolgt, und einen Kanalabschnitt mit einer größeren Strömungsquerschnittsfläche, in welchem eine Zündung des ihn durchströmenden Brennstoff-Luft-Gemischs möglich ist. Somit besitzt jeder Strömungskanal wenigstens einen zündfähigen Kanalabschnitt und einen nicht zündfähigen Kanalabschnitt. Die Struktur der Brennervorrichtung kann nun so ausgebildet werden, dass innerhalb der gesamten Struktur die zündfähigen Kanalabschnitte zueinander versetzt bzw. so verteilt angeordnet sind, dass eine möglichst gleichmäßige Wärmeverteilung innerhalb der gesamten Struktur, insbesondere in Strömungsrichtung, erreicht wird.

Das zur Ausbildung der Strömungskanäle verwendete Material kann allgemein als Substrat bezeichnet werden, welches aus Metallfolien oder Fasermatten oder durch Extrusion einer keramischen oder metallischen Masse mit anschließender thermischer Behandlung hergestellt werden kann. Die Strömungskanäle sind vorzugsweise aus zirkonoxidhaltigen und/oder eisenund/oder chrom- und/oder aluminiumhaltigen Metallfolien gebildet, jedoch kann auch ein anderes, insbesondere katalytisch wirksames Substrat eingesetzt werden. Es können hierfür auch Materialien wie SiC, Aluminiumtitanat, Mullit oder beispielsweise Cordierit verwendet werden. Durch die Verwendung von zirkonoxidhaltigen Materialien ergibt sich der Vorteil, dass die Schmelztemperatur auf über 1 300°C angehoben werden kann.

Die Kanalwände der Strömungskanäle lassen sich besonders einfach aus geraden und/oder abgewinkelten Metallfolien herstellen. Die derart ausgebildeten Kanalwände lassen sich im Abstand übereinander zu einer geeigneten Gesamtstruktur der Brennervorrichtung auf einfache Weise zusammensetzen.

Außerdem können gewellte Metallfolien zur Bildung der Kanalwände der Strömungskanäle verwendet werden, die ebenfalls eine einfache Herstellung der Brennervorrichtung ermöglichen.

Zur Ausbildung von zündfähigen Bereichen innerhalb der Struktur der Brennervorrichtung können in den Kanalwänden der Strömungskanäle Durchbrechungen ausgebildet sein, die in diesem Bereich die für einen zündfähigen Bereich erforderliche Vergrößerung der Strömungsquerschnittsfläche ergeben. Die Kanalabschnitte ohne Durchbrechungen bilden dabei die nicht zündfähigen Bereiche der Struktur.

Unter Verwendung derartiger Durchbrechungen in den Kanalwänden der Strömungskanäle ist es möglich, die Strömungskanäle von geraden, parallel ausgerichteten Kanalwänden zu begrenzen. Der Gesamtaufbau der Struktur wird dadurch besonders einfach.

Besonders vorteilhaft ist es, die Struktur der Brennervorrichtung so auszugestalten, dass diese in Längs- und Querrichtung sowie auch in der Höhe der Struktur verteilt angeordnete zündfähige und nicht zündfähige Kanalabschnitte hat. Durch eine möglichst gleichmäßige Verteilung der zündfähigen und nicht zündfähigen Kanalabschnitte in x-, y- und z- Richtung der Struktur erhält man eine gleichmäßige Wärmebelastung innerhalb der gesamten Brennervorrichtung und auch eine gleichmäßige Verbrennung.

Durch die Anordnung von ausschließlich zündfähigen Kanalabschnitten im Gasaustrittsbereich der Brennervorrichtung kann eine optimale Verbrennung bzw. Nachverbrennung sichergestellt werden, so dass eine rußfreie und vollständige Oxidation des durchströmenden Gemischs sichergestellt ist.

Werden im Gasaustrittsbereich die Strömungsquerschnittsflächen so verringert, dass die Pecletzahl unter eine kritische Grenze fällt, unterhalb der keine Zündung des Gemischs mehr möglich ist, wird sicher verhindert, dass Flammen aus dem Brenner austreten und im kalten Gas- oder Abgasstrom gequencht werden, was zu erhöhten Rußemissionen führen würde.

Eine weiterführende Absenkung der Temperatur innerhalb der Brennervorrichtung kann durch eine Ausführung als Wärmetauscher, insbesondere als Kreuzstromwärmetauscher, erreicht werden. Ein solcher Wärmetauscher kann für unterschiedlichste Anwendungen eingesetzt werden, um z. B. ein gasförmiges oder flüssiges Medium zu erhitzen. Auch der Einsatz in einem Hochtemperaturbrennstoffzellensystem ist möglich.

Die Erfindung wird nachfolgend anhand von in der Zeichnung dargestellten Ausführungsbeispielen näher erläutert.

Es zeigen:

Fig. 1      einen vereinfachten Längsschnitt einer Brennervorrichtung mit vorgelagerter Mischzone für ein Brennstoff-Luft-Gemisch,

Fig. 2      eine perspektivische Teilansicht der Brennervorrichtung von Figur 1, jedoch mit in z-Richtung versetzt angeordneten Kanalabschnitten,

Fig. 3      eine schematische im Längsschnitt dargestellte Brennervorrichtung mit parallel ausgerichteten Kanalwänden,

Fig. 4      eine mögliche Verteilung zündfähiger Kanalabschnitte innerhalb der Struktur der Brennervorrichtung,

Fig. 5      eine perspektivische Teilansicht einer gewellten Kanalwand mit Durchbrüchen,

Fig. 6      einen Ausschnitt aus einer Struktur, die hier beispielhaft als Kreuzstromwärmetauscher ausgebildet ist, und

Fig. 7 den prinzipiellen Aufbau eines hier beispielhaft als Kreuzstromwärmetauscher ausgebildeten Wärmetauschers mit geraden Kanalwänden.

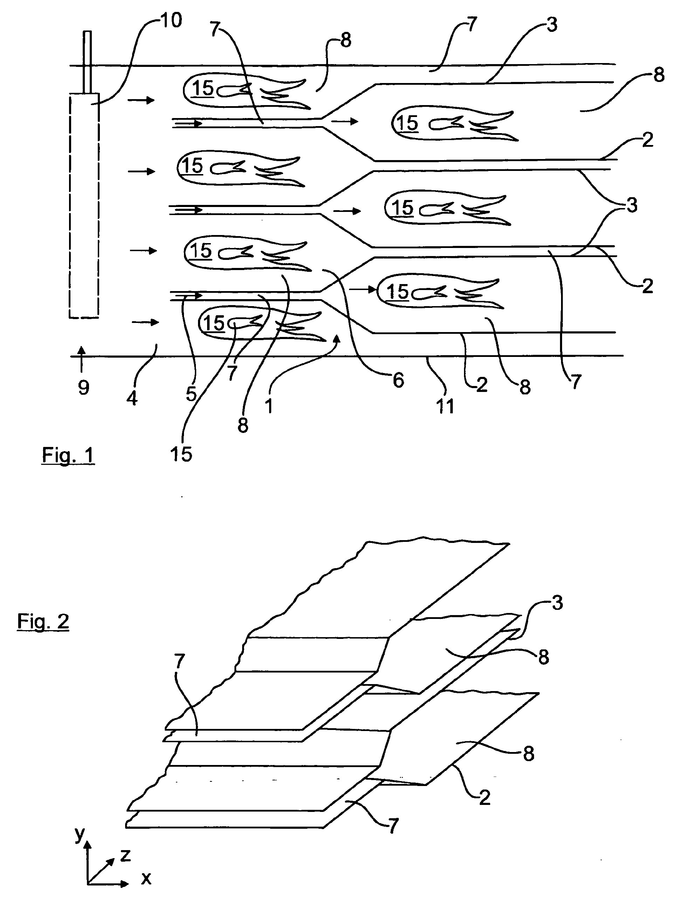

In Figur 1 ist die Struktur der Brennervorrichtung 1 im Längsschnitt dargestellt. Die Brennervorrichtung 1 besteht aus übereinander angeordneten, abgewinkelten Metallfolien oder keramischen Platten 2, 3 die im Abstand übereinander gestapelt den Brennraum des Brenners 4 ausfüllen. Die abgewinkelten Metallfolien oder Platten 2, 3 sind so übereinander angeordnet, dass eine Struktur mit Strömungskanälen 5, 6 entsteht, die jeweils wenigstens einen Kanalabschnitt 7 mit einer kleineren Strömungsquerschnittsfläche und einen Kanalabschnitt 8 mit einer größeren Strömungsquerschnittsfläche haben. Dabei sind die Strömungsquerschnittsflächen so gewählt, dass in den engeren Kanalabschnitten 7 eine Zündung des einströmenden Brennstoff-Luft-Gemischs nicht möglich ist, während sich dieses Gemisch in den erweiterten Kanalabschnitten 8 durch eine Reaktion mit dem katalytischen Material der Kanalwände 2, 3 entzündet. Die freie Strömungsquerschnittsfläche in den Strömungskanälen 5, 6 kann z. B. zwischen 0,15 mm$^2$ und 25 mm$^2$ liegen. In den zündfähigen Kanalabschnitten 8 sind stilisierte Flammen 15 eingezeichnet.

Vor der Brennervorrichtung 1 befindet sich eine Mischzone 9, in der das Brennstoff-Luft-Gemisch mittels einer Zuführeinrichtung 10 zugeführt wird. Die gesamte Anordnung von Figur 1 kann sich im Abgaskanal 11 eines Kraftfahrzeugs befinden, um mit Hilfe der Brennervorrichtung eine Erhöhung der Abgastemperatur zu erreichen, damit ein hier nicht dargestelltes, nachfolgendes Abgasreinigungssystem optimal betrieben werden kann. Die Hauptströmungsrichtung des Gasstroms mit dem zugeführten Brennstoff-Luft-Gemisch ist durch Richtungspfeile dargestellt.

In der perspektivischen Darstellung von Figur 2 ist eine Ausführung angedeutet, bei der die zündfähigen Kanalabschnitte 8 in z-Richtung, also der Strömungsrichtung, zueinander verschoben sind. Insbesondere kann auch eine Variation der Querschnittsflächen eines Strömungskanals sowohl entlang der z-Richtung als auch in x-Richtung vorgesehen sein.

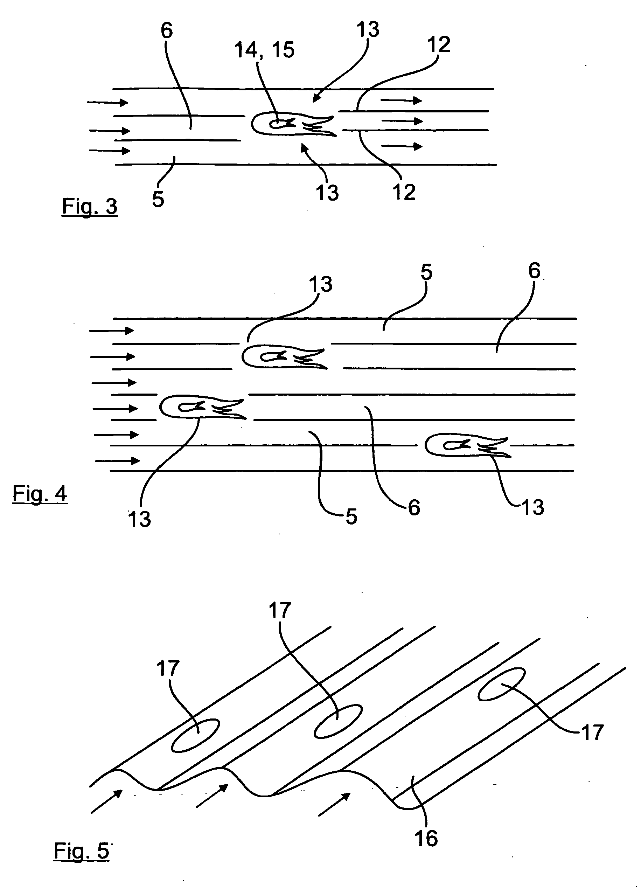

In Figur 3 ist vereinfacht dargestellt, dass die Kanalwände auch von geraden Metallfolien oder keramischen Platten 12 gebildet sein können, wobei zur Ausbildung von größeren Strömungsquerschnittsflächen Durchbrechungen 13 in den Metallfolien oder Platten 12 vorgesehen sind. Die Durchbrechungen 13 definieren somit einen zündfähigen Kanalabschnitt 14, in welchem eine Flamme 15 dargestellt ist. Eine derart aufgebaute Struktur für eine Brennervorrichtung ist besonders einfach herstellbar.

In Figur 4 ist veranschaulicht, dass die Durchbrechungen 13 an unterschiedlichen Längs- und/oder Querpositionen innerhalb der eine Brennervorrichtung bildenden Struktur vorgesehen sein können. Dies bedeutet, dass die Durchbrechungen 13 in Strömungsrichtung des Brennstoff-Luft-Gemischs und auch quer zu dessen Strömungsrichtung versetzt innerhalb der Struktur angeordnet sein können. Die Durchbrechungen können also in x-, y- und z- Richtung gleich- oder ungleichmäßig verteilt innerhalb der gesamten Struktur angeordnet sein, um eine möglichst gleichmäßige Wärmeverteilung durch die sich damit ergebende Verteilung der zündfähigen Kanalabschnitte zu erreichen.

Anstelle von geraden Metallfolien können auch gemäß Figur 5 gewellte Metallfolien 16 zur Bildung der Strömungskanäle 5, 6 verwendet werden, wobei auch hier mittels Durchbrechungen 17 zündfähige Kanalabschnitte ausgebildet werden können. Die einzelnen Metallfolien 16 können dann analog zu Figur 4 übereinander zur Ausbildung einer geeigneten Struktur für die Brennervorrichtung angeordnet werden.

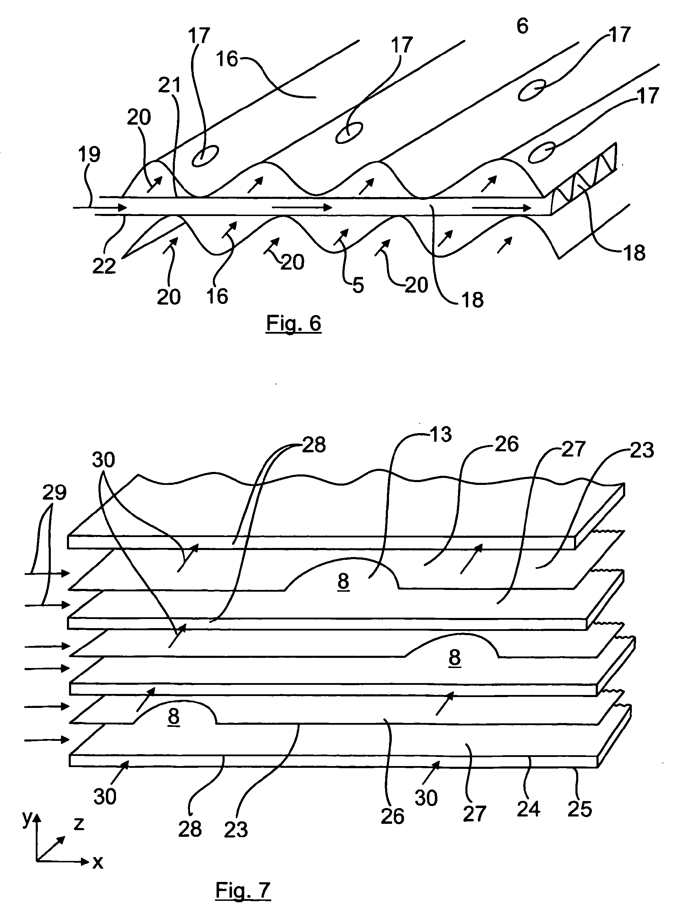

Figur 6 veranschaulicht die Ausbildung eines Kreuzstromwärmetauschers, der in die Brennervorrichtung in Form von mehreren den Brennraum kreuzenden Kanälen aufgebaut ist. Zur Vereinfachung der Darstellung ist in Figur 6 nur einer der den Brennraum kreuzenden Kanäle 18 dargestellt, der beispielsweise von einem zu erhitzenden Gas oder einem anderen Medium in Pfeilrichtung 19 durchströmt wird. Der Brennraum des Kreuzstromwärmetauschers kann dagegen eine aus Metallfolien 16 gebildete innere Struktur haben, die von einem Brennstoff-Luft-Gemisch in Pfeilrichtung 20 durchströmt wird. Wie bereits zuvor beschrieben, können Durchbrechungen 17 in den Metallfolien 16 vorgesehen sein, um in diesen Bereichen vergrößerte Strömungsquerschnittsflächen innerhalb der Struktur zu schaffen, so dass sich dort das hindurchströmende Brennstoff-Luft-Gemisch entzündet und dabei die angrenzenden Trennwände 21, 22 zum Kanal 18 erwärmt. Auf diese Weise wird das den Kanal 18 durchströmende Gas, beispielsweise das Abgas einer Brennkraftmaschine eines Fahrzeugs, auf eine für eine Abgasnachbehandlung geeignete höhere Abgastemperatur gebracht.

Figur 7 zeigt abschnittsweise die Struktur eines Kreuzstromwärmetauschers, die aus gerade ausgerichteten Metallfolien 23 bis 25 aufgebaut ist. Die Metallfolien 23 und 24 bilden Strömungskanäle 26, 27 für den Brennraum, während die Metallfolien 24 und 25 die Kanäle 28 für ein zu erwärmendes Medium bilden. Den Strömungskanälen 26, 27 wird ein Brennstoff-Luft-Gemisch gemäß den Pfeilrichtungen 29 zugeführt, während den Kanälen 28 ein zu erwärmendes Medium entsprechend den Pfeilrichtungen 30 zugeführt wird. Die Innenwände der Strömungskanäle 26, 27 können mit einem katalytischen Material, insbesondere Cer, Nickel, Palladium, Platin, Osmium, Rhodium, Iridium, Gold oder Silber beschichtet oder aus einem solchen hergestellt sein, so dass das hier seitlich einströmende Brennstoff-Luft-Gemisch sich in zündfähigen Kanalabschnitten 8 leichter entzündet. Die zündfähigen Kanalabschnitte 8 sind durch entsprechende Durchbrechungen 13 in den Metallfolien 23 ausgebildet. Die Durchbrechungen 13 können insbesondere auch in z-Richtung der Struktur so verteilt angeordnet sein, dass eine möglichst gleichmäßige Temperaturverteilung in der gesamten Struktur gewährleistet wird. Damit ist dann auch eine gleichmäßige Wärmeübertragung auf das die Kanäle 28 durchströmende Medium möglich.

Bei dem im Kreuzstromwärmetauscher zu erhitzenden Medium kann es sich auch um Wasser zum Betrieb einer Dampfturbine oder um Brauchwasser oder um Luft oder ein anderes Gas, insbesondere zur Vorwärmung einer Hochtemperaturbrennstoffzelle und/oder eines Reformers, handeln.

**Patentansprüche**

1. Brennervorrichtung (1) für den Brennraum eines Brenners (4), wobei die Brennervorrichtung (1) eine von einem brennbaren Gemisch durchströmbare Struktur mit unterschiedlich großen Strömungsquerschnittsflächen aufweist, und wobei die durchströmbare Struktur mehrere Strömungskanäle (5, 6) mit in Strömungsrichtung sich ändernden Strömungsquerschnitten aufweist, von denen jeder Strömungskanal (5, 6) wenigstens einen Kanalabschnitt (7) mit einer kleineren Strömungsquerschnittsfläche aufweist, in welchem keine Zündung des ihn durchströmenden Gemisches erfolgt, und einen Kanalabschnitt (8) mit einer größeren Strömungsquerschnittsfläche aufweist, in welchem eine Zündung des ihn durchströmenden Gemisches möglich ist, **dadurch gekennzeichnet, dass** Metallfolien (2, 3) oder zirkonoxidhaltige Keramik oder SiC oder Aluminiumtitanat oder Mullit die Strömungskanäle (5, 6) bilden.

2. Brennervorrichtung nach Anspruch 1, **dadurch gekennzeichnet, dass** die Kanalabschnitte (7, 8) benachbarter Strömungskanäle (5, 6) so versetzt angeordnet sind, dass ein Kanalabschnitt (7) mit einer kleineren Strömungsquerschnittsfläche einem Kanalabschnitt (8) mit einer größeren Strömungsquerschnittsfläche benachbart ist.

3. Brennervorrichtung nach einem der Ansprüche 1 oder 2, **dadurch gekennzeichnet, dass** die Strömungskanäle (5, 6) aus einem katalytisch wirkenden Material, insbesondere Cer und/oder Nickel und/oder Palladium und/oder Platin und/oder Osmium und/oder Rhodium und/oder Iridium und/oder Gold und/oder Silber, bestehen oder mit einem solchen Material beschichtet sind.

4. Brennervorrichtung nach einem der vorhergehenden Ansprüche, **dadurch gekennzeichnet, dass** Metallfolien (2, 3) zirkonoxidhaltige und/oder eisen- und/oder chrom- und/oder aluminiumhaltige Metallfolien sind.

5. Brennervorrichtung nach einem der vorhergehenden Ansprüche, **dadurch gekennzeichnet, dass** die Kanalwände der Strömungskanäle (5, 6) wenigstens teilweise aus abgewinkelten Metallfolien (2, 3) bestehen.

6. Brennervorrichtung nach einem der vorhergehenden Ansprüche, **dadurch gekennzeichnet, dass** wenigstens teilweise gewellte Metallfolien (16) die Kanalwände der Strömungskanäle bilden.

7. Brennervorrichtung nach einem der vorhergehenden Ansprüche, **dadurch gekennzeichnet, dass** die Strömungskanäle (5, 6) zur Ausbildung von größeren Strömungsquerschnittsflächen Durchbrechungen (13) in den Kanalwänden aufweisen.

8. Brennervorrichtung nach Anspruch 1, **dadurch gekennzeichnet, dass** die Strömungskanäle (5, 6) von geraden, parallel ausgerichteten Kanalwänden begrenzt sind, und dass zur Ausbildung der größeren Strömungsquerschnittsflächen Durchbrechungen (13) in den Kanalwänden vorgesehen sind.

9. Brennervorrichtung nach einem der vorhergehenden Ansprüche, **dadurch gekennzeichnet, dass** die Brennervorrichtung eine Struktur aufweist, die in Längs- und Querrichtung sowie in der Höhe verteilt angeordnete zündfähige und nicht zündfähige Kanalabschnitte aufweist.

10. Brennervorrichtung nach einem der vorhergehenden Ansprüche, **dadurch gekennzeichnet, dass** im Gasaustrittsbereich der Brennervorrichtung (1) ausschließlich zündfähige Kanalabschnitte (8) angeordnet sind.

11. Brennervorrichtung nach einem der Ansprüche 1 bis 9, **dadurch gekennzeichnet, dass** im Gasaustrittsbereich der Brennervorrichtung (1) ausschließlich nicht zündfähige Kanalabschnitte (7) angeordnet sind.

12. Brennervorrichtung nach einem der vorhergehenden Ansprüche, **dadurch gekennzeichnet, dass** die Brennervorrichtung (1) Teil eines Wärmetauschers ist, die von mehreren von einem Medium durchströmten Kanälen (28) durchsetzt ist.

13. Brennervorrichtung nach Anspruch 12, **dadurch gekennzeichnet, dass** die Brennervorrichtung (1) Teil eines Kreuzstromwärmetauschers ist, die von mehreren den Brennraum kreuzenden, von einem Medium durchströmten Kanälen (28) durchsetzt ist.

14. Brennervorrichtung nach Anspruch 12 oder 13, **da-**

**durch gekennzeichnet, dass** es sich bei dem durch den Wärmetauscher zu erhitzenden Medium um das Abgas einer Brennkraftmaschine oder um Wasser zum Betrieb einer Dampfturbine oder um Brauchwasser oder um Luft oder ein anderes Gas, insbesondere zur Vorwärmung einer Hochtemperaturbrennstoffzelle und/oder eines Reformers, handelt.

15. Abgaskanal einer Brennkraftmaschine mit einer darin angeordneten Brennervorrichtung nach einem der Ansprüche 1 bis 14.


**Claims**

1. Burner apparatus (1) for the combustion chamber of a burner (4), wherein the burner apparatus (1) has a structure which can be traversed by a combustible mixture and which has flow cross section areas of different sizes, and wherein the traversable structure has multiple flow ducts (5, 6) with flow cross sections that change in the flow direction, of which each flow duct (5, 6) has at least one duct section (7) with a smaller flow cross section area, in which no ignition of the traversing mixture takes place, and a duct section (8) with a larger flow cross section area in which ignition of the traversing mixture is possible, **characterized in that** the flow ducts (5, 6) are formed by metal foils (2, 3) or zirconium oxide-containing ceramic or SiC or aluminium titanate or mullite.

2. Burner apparatus according to Claim 1, **characterized in that** the duct sections (7, 8) of adjacent flow ducts (5, 6) are arranged offset such that a duct section (7) of smaller flow cross section area is adjacent to a duct section (8) of larger flow cross section area.

3. Burner apparatus according to either of Claims 1 and 2, **characterized in that** the flow ducts (5, 6) consist of a material having a catalytic effect, in particular cerium and/or nickel and/or palladium and/or platinum and/or osmium and/or rhodium and/or iridium and/or gold and/or silver, or are coated with such a material.

4. Burner apparatus according to one of the preceding claims, **characterized in that** metal foils (2, 3) are metal foils containing zirconium oxide and/or iron and/or chromium and/or aluminium.

5. Burner apparatus according to one of the preceding claims, **characterized in that** the duct walls of the flow ducts (5, 6) consist at least in part of angled metal foils (2, 3).

6. Burner apparatus according to one of the preceding claims, **characterized in that** at least partially corrugated metal foils (16) form the duct walls of the flow ducts.

7. Burner apparatus according to one of the preceding claims, **characterized in that**, in order to form larger flow cross section areas, the flow ducts (5, 6) have openings (13) in the duct walls.

8. Burner apparatus according to Claim 1, **characterized in that** the flow ducts (5, 6) are bounded by straight, parallel duct walls, and **in that**, in order to form the larger flow cross section areas, openings (13) are provided in the duct walls.

9. Burner apparatus according to one of the preceding claims, **characterized in that** the burner apparatus has a structure that has ignition-suitable and ignition-unsuitable duct sections distributed in the longitudinal direction, in the transverse direction and in the vertical direction.

10. Burner apparatus according to one of the preceding claims, **characterized in that** only ignition-suitable duct sections (8) are arranged in the gas outlet region of the burner apparatus (1).

11. Burner apparatus according to one of Claims 1 to 9, **characterized in that** only ignition-unsuitable duct sections (7) are arranged in the gas outlet region of the burner apparatus (1).

12. Burner apparatus according to one of the preceding claims, **characterized in that** the burner apparatus (1) is part of a heat exchanger through which pass multiple ducts (28) that are traversed by a medium.

13. Burner apparatus according to Claim 12, **characterized in that** the burner apparatus (1) is part of a crossflow heat exchanger through which pass multiple ducts (28) that cross the combustion chamber and are traversed by a medium.

14. Burner apparatus according to Claim 12 or 13, **characterized in that** the medium to be heated by the heat exchanger is the exhaust gas of an internal combustion engine or water for operating a steam turbine or service water or air or another gas, in particular for preheating a high-temperature fuel cell and/or a reformer.

15. Exhaust gas duct of an internal combustion engine, having, arranged therein, a burner apparatus according to one of Claims 1 to 14.


**Revendications**

1. Dispositif de brûleur (1) pour la chambre de combustion d'un brûleur (4), le dispositif de brûleur (1) comportant une structure traversable par un mélange inflammable avec des surfaces de section transversale d'écoulement de tailles différentes et la structure traversable comportant plusieurs canaux d'écoulement (5, 6) avec les sections transversales d'écoulement variant dans la direction d'écoulement, parmi lesquels chaque canal d'écoulement (5, 6) comporte au moins une section de canal (7) avec une plus petite surface de section transversale d'écoulement dans laquelle aucun allumage du mélange le traversant ne se produit et une section de canal (8) avec une plus grande surface de section transversale d'écoulement dans laquelle un allumage du mélange le traversant est possible, **caractérisé en ce que** des films métalliques (2, 3) contenant de l'oxyde de zirconium ou une céramique ou du SiC ou du titanate d'aluminium ou de la mullite forment les canaux d'écoulement (5, 6).

2. Dispositif de brûleur selon la revendication 1, **caractérisé en ce que** les sections de canal (7, 8) sont disposées de telle sorte de façon décalée par rapport aux canaux d'écoulement (5, 6) connexes qu'une section de canal (7) avec une plus petite surface de section transversale d'écoulement est placée à proximité d'une section de canal (8) avec une plus grande surface de section transversale d'écoulement.

3. Dispositif de brûleur selon l'une quelconque des revendications 1 ou 2, **caractérisé en ce que** les canaux d'écoulement (5, 6) se composent d'un matériau à action catalytique, notamment Cer et/ou de nickel et/ou de palladium et/ou de platine et/ou d'osmium et/ou de rhodium et/ou d'iridium et/ou d'or et/ou d'argent ou sont revêtus d'un tel matériau.

4. Dispositif de brûleur selon l'une quelconque des revendications précédentes, **caractérisé en ce que** des films métalliques (2, 3) sont des films métalliques contenant de l'oxyde de zirconium et/ou contenant du fer et/ou du chrome et/ou de l'aluminium.

5. Dispositif de brûleur selon l'une quelconque des revendications précédentes, **caractérisé en ce que** les parois de canal des canaux d'écoulement (5, 6) se composent au moins en partie de films métalliques (2, 3) anguleux.

6. Dispositif de brûleur selon l'une quelconque des revendications précédentes, **caractérisé en ce que** des films métalliques (16) au moins en partie ondulés forment les parois de canal des canaux d'écoulement.

7. Dispositif de brûleur selon l'une quelconque des revendications précédentes, **caractérisé en ce que** les canaux d'écoulement (5, 6) comportent des cassures (13) dans les parois de canal pour former de plus grandes surfaces de section transversale d'écoulement.

8. Dispositif de brûleur selon la revendication 1, **caractérisé en ce que** les canaux d'écoulement (5, 6) sont délimités par des parois de canal droites orientées parallèlement et que des cassures (13) sont prévues dans les parois de canal pour former de plus grandes surfaces de section transversale d'écoulement.

9. Dispositif de brûleur selon l'une quelconque des revendications précédentes, **caractérisé en ce que** le dispositif de brûleur comporte une structure comportant des sections de canal inflammables et non inflammables disposées de façon répartie dans la direction longitudinale et transversale ainsi qu'en hauteur.

10. Dispositif de brûleur selon l'une quelconque des revendications précédentes, **caractérisé en ce que** des sections de canal (8) uniquement inflammables sont disposées dans la région de sortie des gaz du dispositif de brûleur (1).

11. Dispositif de brûleur selon l'une quelconque des revendications 1 à 9, **caractérisé en ce que** des sections de canal (7) uniquement non inflammables sont disposées dans la région de sortie des gaz du dispositif de brûleur (1).

12. Dispositif de brûleur selon l'une quelconque des revendications précédentes, **caractérisé en ce que** le dispositif de brûleur (1) fait partie d'un échangeur thermique traversé par plusieurs canaux (28) traversés par un agent.

13. Dispositif de brûleur selon la revendication 12, **caractérisé en ce que** le dispositif de brûleur (1) fait partie d'un échangeur thermique à flux croisés introduits par plusieurs canaux (28) croisant la chambre de combustion et traversés par un agent.

14. Dispositif de brûleur selon la revendication 12 ou 13, caractérisé en ce l'agent à chauffer par l'échangeur thermique est le gaz d'échappement d'un moteur à combustion interne ou l'eau servant à faire fonctionner une turbine à vapeur ou de l'eau industrielle ou de l'air ou un autre gaz, notamment pour le préchauffage d'une pile à combustible à haute température et/ou d'un réformateur.

15. Canal de gaz d'échappement de moteur à combustion interne avec un dispositif de brûleur selon l'une quelconque des revendications 1 à 14 disposé à l'intérieur.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004049903 A1
- EP 1918640 A2
- DE 102009028624